# EUROPEAN PATENT SPECIFICATION

(11) **EP 1 304 459 B1**
(45) Date of publication and mention of the grant of the patent: **13.06.2012**
(21) Application number: 01949920.1
(22) Date of filing: 09.07.2001
(51) Int. Cl.: F01P 7/16, F16J 15/06, F16K 31/68, F02F 11/00

(54) **SEAL MEMBER, AND CONSTRUCTION FOR ATTACHING THERMOSTATS USING THIS SEAL MEMBER**
DICHTUNGSTEIL UND ANORDNUNG ZUM BEFESTIGEN VON THERMOSTATEN UNTER BENUTZUNG DIESES DICHTUNGSTEILS
JOINT D'ETANCHEITE ET REALISATION DE MONTAGE DE THERMOSTATS AVEC CE JOINT D'ETANCHEITE

(30) Priority: 25.07.2000 JP 2000223310
(43) Date of publication of application: 23.04.2003
(73) Proprietor: Nippon Thermostat Co., Ltd., Kiyose-shi, Tokyo 204-0003 (JP); HONDA GIKEN KOGYO KABUSHIKI KAISHA, Minato-ku, Tokyo 107-0062 (JP)
(72) Inventor: IWAKI, Takahiro, Kiyose-shi, Tokyo 204-0003 (JP); HAMANO, Masahisa, Kiyose-shi, Tokyo 204-0003 (JP); FUKAMACHI, Masatoshi, Wako-shi, Saitama 351-0113 (JP); KUBOTA, Ryo, Wako-shi, Saitama 351-0113 (US); SATO, Kazuhiko, Ageo-shi, Saitama 362-0033 (JP); YAGINUMA, Tadao, Ageo-shi, Saitama 362-0033 (JP)
(74) Representative: HOFFMANN EITLE
(86) International application number: PCT/JP2001/005936
(87) International publication number: WO 2002/008585

(56) References cited:
- EP-A2- 1 024 256
- WO-A1-99/05398
- JP-U- 56 113 121
- US-A- 4 428 527
- US-A- 5 022 662
- US-A- 5 488 805

## Description

The present invention relates to a thermostat mounting structure having a thermostat and a sealing member for mounting the thermostat. Such a thermostat mounting structure is suitable for use in a cooling system of an automotive internal combustion engine, or the like.

The majority of the cooling systems for an automotive internal combustion engine presently available on the market are designed to cool an engine by water used as a liquid coolant or a liquid cooling medium. This type of cooling system is known as the water cooled type cooling system which is employed for an engine of four-wheeled vehicles as well as an engine of two-wheeled vehicles.

Said water cooled type cooling system for an automotive internal combustion engine mentioned above is provided with a radiator outside the engine body to circulate the liquid coolant by connecting the radiator and the engine body with a rubber hose or the like. Thus, the system is comprised of a radiator working as a heat exchanger, a water pump which sends the liquid coolant from the engine to the radiator forcibly under pressure, a thermostat which controls a flow of the liquid coolant on the basis of the temperature of the liquid coolant flowing out of or into the radiator to maintain a suitable temperature, and a rubber hose or the like which defines a circular flow path of the liquid coolant.

And it prevents an overheating caused by the heat from the engine and on the other hand it prevents an over cooling in a cold season, thus always maintaining the engine temperature at an optimum level.

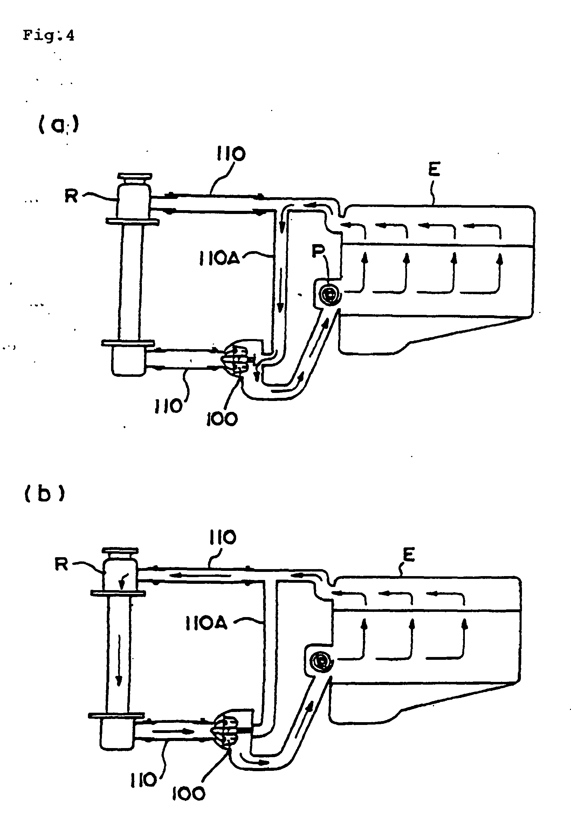

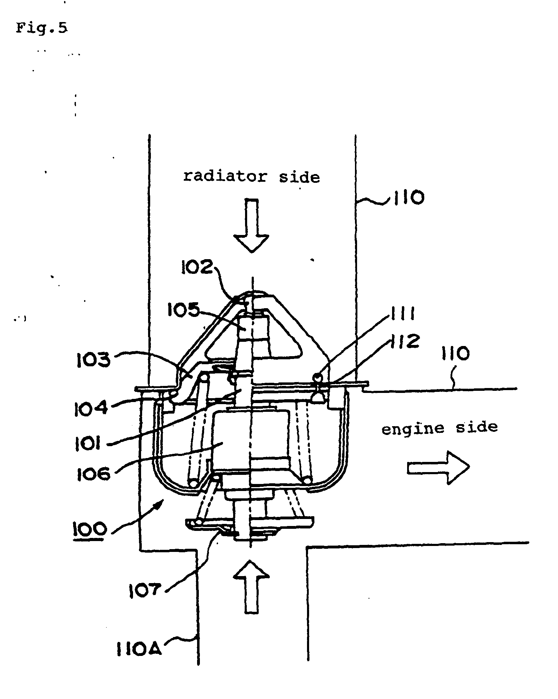

A general thermostat and a structure for mounting such thermostat to be employed for aforementioned water cooled type system will be described with reference to Fig. 4 (a), Fig. 4 (b) and Fig. 5. Fig. 4 (a) and Fig. 4 (b) are explanatory views in which the conventional thermostat is mounted to the liquid coolant flow path of an internal combustion engine in the form of an engine entrance control and Fig 5 is an enlarged view of the thermostat being mounted as shown in Figs. 4a and 4b.

As shown in said Figures, a thermostat 100 is arranged to be mounted at a predetermined position in a liquid coolant flow path 110 defined between a body of an engine E and a radiator R. Also, as shown in Fig. 5, said thermostat 100 is provided with a piston 102 which moves back and forth as a result of expansion and contraction of wax charged as a thermal expansion element in a wax case 106. Said thermostat 100 is arranged in the liquid coolant flow path 110 such that the moving direction of the piston 102 is set parallel to a flow direction of the liquid coolant.

Further, on said thermostat 100, a valve element 103 and a valve seat 104 come into and out of contact with each other by the reciprocal action of the piston 102 to assure blockage and communication of the liquid coolant flow path.

Still, in Fig. 5, a numeral 105 denotes a guide section to guide the piston 102 for reciprocal action thereof, a numeral 106 is a wax case charged with wax, a numeral 107 designates a second valve element to close or to open a bypass line 110A. Moreover, in Fig. 4, a letter P denotes a water pump and a letter R denotes a radiator.

Still more, a numeral 111 therein denotes a jiggle valve and said thermostat 100 is provided with said jiggle valve 111 which acts as a so-called air-passing hole.

Thus, the thermostat of internal combustion engine generally takes a valve closing position to prevent the water coolant from flowing into the radiator when the water temperature is at a lower level.

Therefore, when the water coolant is to be supplied from above the radiator side, it is difficult to supply the water without allowing the air inside a water jacket to escape because the thermostat is in the valve closing position. For the reason mentioned above, an air-passing hole 112 is provided in the thermostat. Also, said air-passing hole 112 works as a hole to let out the air mixed in the water coolant while the engine is running. On the other hand, because the water coolant flows into the radiator by way of said air-passing hole while the engine is running, it takes time for warming up. Therefore, the jiggle valve 111 is provided with a structure which enables to let the air out but closes the valve when it is under water pressure.

Here, an operation of the thermostat 100 will be described hereinafter. As mentioned above, when the water coolant is first supplied into the radiator or the water jacket, the jiggle valve 111 opens to let out the air.

Then, after the water coolant is supplied thereinto, the thermostat 100 causes the liquid coolant flow path 110 to be closed from the time when the engine is started until the time when the engine is warmed up to an optimum temperature. At the same time, said jiggle valve 111 is closed as well. As a result, the water coolant from the engine E will not flow into the radiator R but circulate back to the engine E by way of the bypass line 110A (see the arrow marks in Fig. 4 (a)) such that the engine is warmed up to the optimum temperature quickly.

On the other hand, after the engine E is warmed up to said optimum temperature, the valve element 103 of the thermostat 100 opens as shown in Fig. 4 (b), such that the liquid coolant flow path 110 of the radiator side is brought into communication. As a result, the liquid coolant circulates to the engine E by way of the radiator R (see the arrow marks in Fig. 4 (b)) and therefore inside the engine E is cooled to maintain the temperature at an optimum level.

By the way, since said conventional thermostat is located inside the liquid coolant flow path, a pipe diameter of the liquid coolant flow path 110 where the thermostat 100 is located is required to be large to maintain the flow of the liquid coolant within the liquid flow path at a predetermined level. In addition, an efficient layout is needed for improvement of the specific fuel consumption and adoption of the water cooled type in two-wheeled vehicles.

A similar arrangement is shown in the document US 4,428,528.

WO 99/05398 describes a head gasket which acts, when clamped between a head and a cylinder block of an internal combustion engine, to form a seal around at least one lubricant or hydraulic fluid passage which extends between the head and the block. The gasket also comprises a non-return valve which extends across said passage and allows flow of liquid in said passage towards the head but prevents flow of liquid in said passage towards the block.

To solve the problems as described above, a buried type thermostat which is buried in an insertion hole formed across the liquid coolant flow path in an engine head has already been proposed (Japanese Patent Application No. 11-17923).

However, as the buried type thermostat has a different structure from the conventional thermostat, a new jiggle valve structure has been in demand.

The inventors have come to invent the present invention without forming a jiggle valve in the valve element of the buried type thermostat but by adding a jiggle valve (valve) function to a sealing member used for the buried type thermostat.

It is an object of the present invention to provide a sealing member with a valve function incorporated thereof and a structure for mounting a thermostat by use of said sealing member.

According to the invention, there is provided a thermostat mounting structure comprising a thermostat and a sealing member, the sealing member comprising: a sealing body formed by a sidewall surrounding an opening at a center thereof and a valve body accommodation section bored in said sidewall of said sealing body and extending along an axis of said sealing body; and a valve body accommodated in said valve body accommodation section, wherein said valve body is a spherical jiggle ball, an upper surface opening and a bottom surface opening of said valve body accommodation section having a diameter as large as a diameter of said jiggle ball or less and also formed with a middle portion having a diameter as large as the diameter of said jiggle ball or more, and opening and closing actions of the valve accommodation section are performed by a movement of said jiggle ball therein, and the thermostat comprising: a cylindrical valve body formed with an entrance opening and an exit opening in a periphery thereof; a flowing area defined within said cylindrical valve body to bring said entrance opening and said exit opening into communication with each other; and a valve element movable back and forth across said flowing area in response to a temperature change of a liquid coolant which is flowing in said flowing area to provide blockage and communication of said area by opening and closing said entrance opening and said exit opening with its movement; the mounting structure further comprising: an insertion hole formed across said liquid coolant line where said valve body is fitted; and a lid which secures the cylindrical valve body inserted in said insertion hole, and arranged in a manner such that opening and closing of said valve body accommodation section is done by a movement of the jiggle ball, said lid being fixed by way of said sealing member while said liquid coolant line and said valve body accommodation section are connected.

For a better understanding of the invention, and to show how the same may be carried into effect, reference will now be made by way of example, to the accompanying drawings, in which:
Fig. 1 (a) and Fig.1 (b) are views showing one embodiment of the sealing member according to the present invention wherein Fig. 1 (a) is a plan view and Fig. 1 (b) is a X-X cross-sectional view of Fig. 1 (a) taken along the line X-X therein;
Fig. 2 is a vertical cross sectional view of the thermostat being located inside the internal combustion engine by use of the sealing member shown in Figs. 1(a and 1(b) and also shows the thermostat closing the flow area;
Fig. 3 is a vertical cross-sectional view showing the thermostat being located inside the internal combustion engine by use of the sealing member shown in Figs. 1 and also shows the thermostat opening the flow area;
Fig. 4 is an explanatory view showing the conventional thermostat being mounted to the liquid coolant flow line of the general internal combustion engine; and
Fig. 5 is an enlarged view of the mounting section of the thermostat shown in Fig. 4.

The following describes a sealing member comprising a sealing body, a valve body accommodation section bored in a sidewall of said sealing body and a valve body accommodated in said valve body accommodation section, and characterized by opening and closing actions of the valve accommodation section by a movement of said valve body therein.

Because a valve function is incorporated into the sealing member, there is no need to provide a valve separately from the sealing member. Therefore, the valve function can be obtained easily and at a low cost.

Said valve body is a spherical jiggle ball, an upper surface opening and a bottom surface opening of said valve body accommodation section having a diameter as large as a diameter of said jiggle ball or less and also formed with a middle portion having a diameter as large as the diameter of said jiggle ball or more.

Thus, because valve body accommodation section, in other words, a jiggle ball accommodation section's upper and bottom surface openings have diameters smaller than that of said jiggle ball and also a middle section of the jiggle ball accommodation section having a diameter larger than that of said jiggle ball, the jiggle ball moves inside the jiggle ball intake accommodation section and closes the upper surface opening and the bottom surface opening. That is to say, by accommodating the jiggle ball into the jiggle ball accommodation section of the sealing member, said jiggle ball performs the so-called valve function.

Therefore, for example, by incorporating said sealing member to a buried type thermostat, a function of conventional thermostats can be obtained.

Moreover, because the sealing member is provided with the so-called jiggle valve, there is no need to work specially on the buried type thermostat itself and therefore a function of the jiggle valve can be obtained at a low cost.

In addition, it is desirable that said sealing body is formed with an opening at a center thereof, said valve body accommodation section extending along an axis of said body.

Moreover, it is desirable that said sealing body is made of synthetic rubber, said jiggle ball being made of any one of steel, stainless steel, or synthetic resin.

Where the sealing member is made of rubber, when the jiggle ball closes the upper opening or the lower opening it abuts against one of openings to close the same completely.

In addition, the following describes a structure for mounting a thermostat by use of a sealing member, the structure being composed of a thermostat provided with a cylindrical valve body formed with an entrance opening and an exit opening in a periphery thereof, a flowing area defined within said cylindrical valve body to bring said entrance opening and said exit opening into communication with each other, a valve element moving back and forth to move across said flowing area in response to a temperature change of a liquid coolant which is flowing in said flowing area to provide blockage and communication thereof area by opening and closing said entrance opening and said exit opening with its movement, an insertion hole formed across said liquid coolant line where said valve is fitted, a lid which secures the cylindrical valve body inserted in said insertion hole, and a member to be fixed to fix said lid, and constructed in a manner such that opening and closing of said valve accommodation section is done by a movement of the cylindrical valve body inserted into the insertion hole, said lid being fixed to a member to be fixed by way of said sealing member while said liquid coolant line and said valve body accommodation section being connected.

Because said liquid coolant line and said valve body accommodation section are connected with the lid being fixed to the member to be fixed by way of said sealing member and it is constructed such that opening and closing of said valve body accommodation section is performed by the movement of the valve, air inside the liquid coolant line is exhausted outside the liquid coolant line by way of the valve body accommodation section.

In addition, the following describes a structure for mounting a thermostat by use of a sealing member which is composed of a thermostat provided with a cylindrical valve body having an entrance opening, an exit opening, a bypass line entrance opening and a bypass line exit opening in a periphery thereof, a flow area defined within said cylindrical valve body to bring said entrance opening and said exit opening into communication with each other, a valve element moving back and forth across said flow area in response to a temperature change of a liquid coolant which is flowing in said flow area to provide blockage and communication by opening and closing said entrance opening and said exit opening, the bypass line entrance opening and the bypass line exit opening with its movement, an insertion hole formed across said liquid coolant line where said cylindrical valve body is inserted, a lid which secures the cylindrical valve body inserted in said insertion hole, and a member to be fixed to fix said lid, and when said cylindrical valve body is inserted into the insertion hole and said lid is secured to the member to be fixed by way of said sealing member, one of the openings of the valve body accommodation section is connected to the liquid coolant line and the other opening and a bypass line of the lid are connected to open and close said valve body accommodation section by a movement of said valve element.

Because it is constructed such that when the lid is fixed to the member to be fixed by way of said sealing member, one opening of said valve accommodation section is connected to the liquid coolant line and the other opening is connected with the bypass line of the lid, at the same time when the lid is fixed, so-called jiggle valve can be obtained.

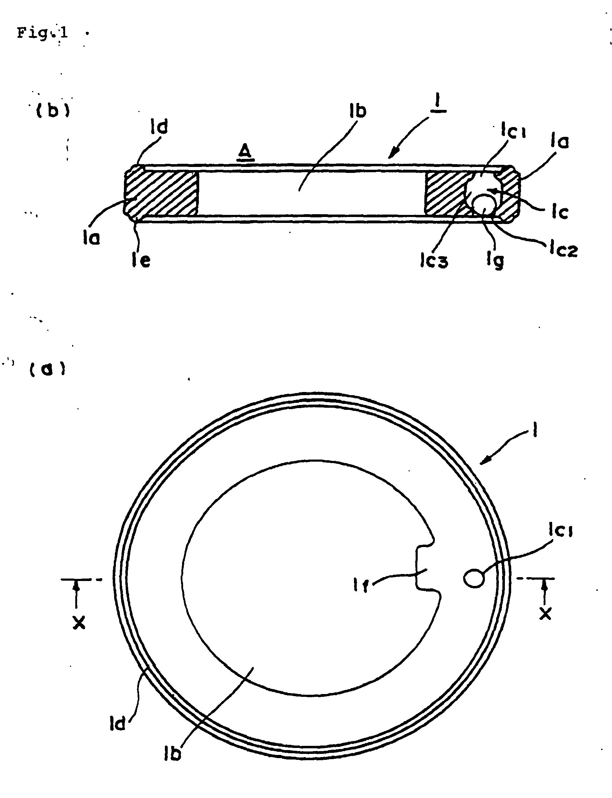

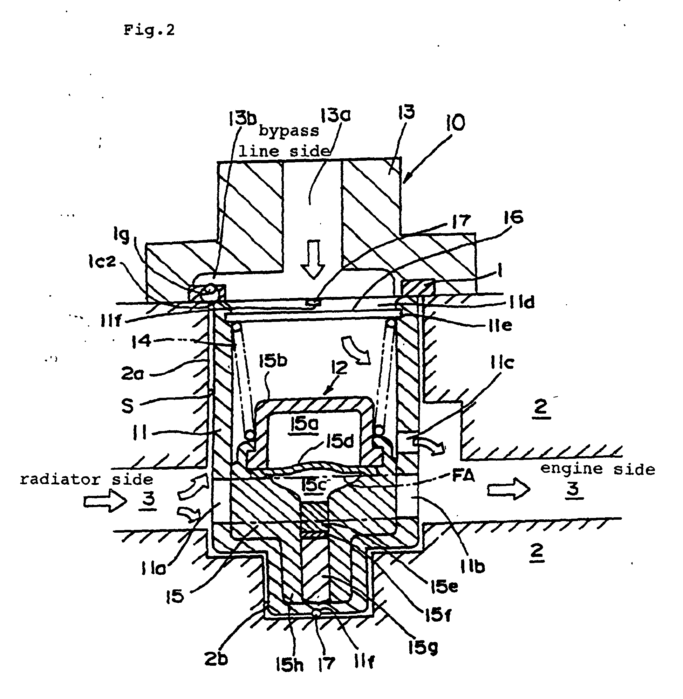

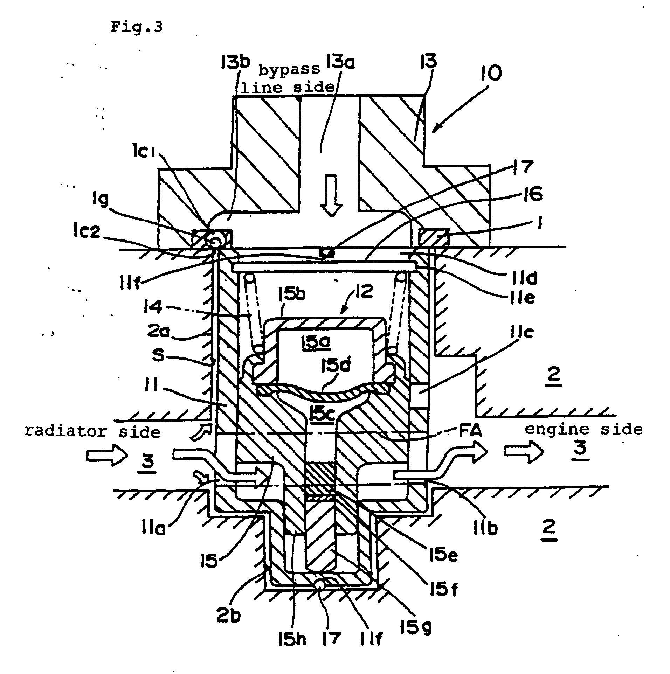

The present invention is described concretely based on embodiments with reference to drawings. Here, the mode of arrangement of a thermostat described hereinafter as a preferred embodiment is a so-called "Entrance Control" where the thermostat is located on the entrance side of an engine to control a liquid coolant, but similar result can be obtained with an "Exit Control" where the thermostat is located on the exit side of the engine to control the liquid coolant. Further, although this thermostat is a buried type thermostat applied to a liquid coolant flow path formed in an engine head, its layout position is not limited to the engine head but the thermostat can be mounted also to an engine block, inside a radiator, at a branch point of a bypass line or the like as long as it is within the liquid coolant flow path. Here, Figs. 1(a) and 1(b) are drawings showing a sealing member according to an embodiment of the present invention; Fig. 1 (a) is a plan view and Fig. 1 (b) is a cross-sectional view taken along the line X-X of Fig. 1 (a). Furthermore, Fig.2 and Fig.3 are vertical cross-sectiorial views showing the buried type thermostat being located inside an internal combustion engine and Fig. 2 shows a flow passage area being closed and Fig.3 shows the flowing passage area being open.

This sealing member A, as shown in Figs 1, comprises a sealing body 1 in the form of a disk having an opening 1b at a center thereof, a jiggle ball accommodation section 1c bored in a side wall of 1a of the body 1 along an axis thereof and a spherical jiggle ball 1g accommodated in said jiggle ball accommodation section 1c.

Further, said jiggle ball accommodation section 1c has an upper surface opening 1c1 and a bottom surface opening 1c2 with diameters as large as the diameter of said jiggle ball 1g or less whereas a middle section 1c3 of the jiggle ball accommodation section **1c** has a diameter as large as the diameter of said jiggle ball 1g or more.

Therefore, said jiggle ball 1g is able to move inside the middle section 1c3 of the jiggle ball accommodation section 1c and moreover it will not fall out from the jiggle ball accommodation section 1c. By the way, the sealing body 1 is made of rubber as described below, with the jiggle ball 1g being forcibly pushed thereinto from the upper surface opening 1c1 or the bottom surface opening 1c2 to complete the accommodation work thereof into the jiggle ball accommodation section 1c.

Moreover, the sealing body. 1 is made of synthetic rubber such as NBR (nitrile, butadiene) or the like whereas the jiggle ball is made of steel, stainless steel, or synthetic resin or the like. Therefore, when jiggle ball 1g is pressed against the upper surface opening 1c1 or the bottom surface opening 1c2, it closely abuts against the opening for a complete blockage thereof.

Further, projections 1d and 1e are formed in the periphery of the upper and bottom surfaces of the sealing body 1. Said projections 1d and 1e are adapted to be deformed to come into close contact with the member for the sealing body to be mounted such that close fit is realized.

Furthermore, the middle portion of the side wall 1a, at which said jiggle ball accommodation section 1c is formed, bulges to form a wide section If projecting toward the opening 1b as shown in Fig 1 (a) such that reinforcement of mechanical strength thereof is achieved.

Next, a structure in which this sealing member A is applied to the buried type thermostat 10 is described hereinafter.

The buried type thermostat 10 is composed of a hollow cylindrical valve body 11 in which an entrance opening 11a and an exit opening 11b are formed in correspondence with said liquid coolant flow path 3, a thermo valve 12 housed in said valve body 11, a lid 13 screwed to an engine head 2 to secure the valve body 11, and a coil spring 14 loaded between the thermo valve 12 and a lid 13 to urge the thermo valve 12 downward as seen in the Figure.

Further, the buried type thermostat 10 is comprised of an exit opening 11c for the bypass line above said exit opening 11b of the liquid coolant flow path in the valve body 11. Moreover, the upper surface of the valve body 11 is opened whereas the inner space of the valve body 11 and the exit opening 11c for the bypass line are in communication when an element (valve body) 15 closes the entrance opening 11a and the exit opening 11b. Further, a bypass line 13a is defined in the lid 13 whereas an entrance opening 11d is formed at an upper portion of the valve body 11. Here, a metallic ring 16 to hold a coil spring 14 is received in a recess 11e formed at the inner wall of the upper end of the valve body.

Said valve body 11 is composed of a hollow cylindrical member having outer diameters to allow insertion thereof into an upper insertion hole 2a and a bottom insertion hole 2b formed in the engine head 2 with a space S being defined between said upper insertion hole 2a and the peripheral surface of the valve body 11.

A continuous slot 11f which is formed in the peripheral surface and bottom end surface of said valve body 11 to extend in such a direction to divide the valve body 11 into two parts in vertical direction, and a ring shaped rubber member 17 is fitted into said slot 11f. Said rubber member 17 is pressed against a side wall of said upper insertion hole 2a and a side wall of said bottom insertion hole 2b when the valve body 11 is inserted into the upper insertion hole 2a and the bottom insertion hole 2b. The rubber member 17 prevents the liquid coolant from flowing out from the entrance opening side (or the radiator side) to the exit opening side (or the engine side) by way of the space S, and it has a function to separate the entrance opening side (the radiator side) and the exit opening side (the engine side).

Moreover, said sealing member 1 is loaded between the lid 13 and the engine head 2. And the bottom surface opening 1c2 of the jiggle ball accommodation section 1c in said sealing member is positioned to come into communication with the space S of the entrance opening side (or the radiator side). In addition, the upper surface opening 1c1 of said jiggle ball accommodation section is positioned to come into communication with an introducing port 13b formed in lid 13. Here, it is to be noted that said introducing port 13b is in communication with the bypass line 13a in the lid 13.

Therefore, the liquid coolant flow path 3 on the radiator side is adapted to come into communication with the bypass line 13a through the space S on the entrance opening side (the radiator side), the jiggle ball accommodation section 1c, and the introducing port 13b. Provided however, the liquid coolant flow path 3 and the bypass line 13a are normally out of communication because the jiggle ball accommodation section 1c accommodates the jiggle ball 1g which closes the bottom surface opening 1c2.

By the way, a thermo valve 12 is composed of a wax case 15b charged with an expansive wax 15a, a diaphragm 15d to transmit the expansion and the contraction of the wax 15a to a semi-fluid 15c on upper side, the semi-fluid 15c which transfers the reaction of the diaphragm 15d to a rubber piston 15e on the upper side, a back-up plate 15f which transmits the reaction of the semi-fluid 15c to a piston 15g on the upper side, the piston 15g which pushes the bottom inner surface of a valve body 17 and the element (valve element) 15 comprising these component members arranged in a laminated constitution.

Said element (or valve element) 15 is adapted to slide along the inner wall surface of the valve body 11 so as to open and close the entrance opening 11a, the exit opening 11b and the bypass line exit opening 11c. Also, the wax case 15b charged with the wax 15a is secured by calking or the like. On the other hand, the lower side of the element (valve element) 15 located on the upper side is formed with a guide section 15h to guide the piston 15g. The outer periphery of the guiding section 15h is formed in correspondence with the inner wall configuration of the lower portion of the valve 11 and formed to fit within said inner wall to slide therealong.

Also, the coil spring 14 is loaded between the ring 16 and the wax case 15b to be located inside the space defined thereby in the thermo valve 12. The coil spring 14 functions to always urge the thermo valve 12 downwardly (refer to Fig.2 and Fig.3). By the way, by changing the resiliency of the coil spring 14 or the overall height of the coil spring 14, it is able to adapt itself properly to changes in a set operation temperature, a set flow rate or the like of the buried type thermo element 1.

Furthermore, said lid 13 is formed with a thread not shown in the drawings such that said lid 13 may be screwed onto the engine head 2 and secured thereon.

Next, a method of mounting the buried type thermostat 10 is described hereinafter.

As described above, the upper insertion hole 2a and the bottom insertion hole 2b are formed in the engine head 2 in advance. Then, the valve 11 with the thermo valve 12 placed therein is inserted into the upper hole 2a and the lower hole 2b. When performing this insertion, it is needed to conduct a positioning work such that entrance opening 11a, the exit opening 11b and the bypass exit opening 1c are in communication with the liquid coolant flow paths (refer to Fig.2 and Fig3).

After the valve 11 is inserted in, the sealing member 1 is located to straddle the valve 11 and the engine head 2 to allow the jiggle ball accommodation section 1c of the sealing member 1 to communicate with the space S on the entrance opening side (or radiator side) to be covered by lid 13 from above, said lid 13 being screwed and secured thereon.

With the thermostat being incorporated into the engine head 2, the liquid coolant flow path 3 on the radiator side communicates with the bypass line 13a by way of the space S on the entrance opening side (or the radiator side), the jiggle ball accommodation section 1c and the introducing port 13b. However, because the jiggle ball accommodation section 1c accommodates the jiggle ball 1g and closes the bottom surface opening 1c2, the liquid coolant flow path 3 and the bypass line 13a are normally out of communication with each other.

When the liquid coolant is supplied into the radiator and the water jacket, said liquid coolant is filled in under a high pressure. And by the liquid coolant supplied from the radiator side, the air inside the liquid water flow path actuates the jiggle ball 1g in the jiggle ball accommodation section 1c to open the bottom opening 1c2. As a result, the air is exhausted to the bypass line 13a by way of the introducing slot 13b to allow introduction the liquid coolant. The exhausted air circulates and is exhausted to outside from an air vent section and then the introduction of the liquid coolant is completed.

Furthermore, a function of the thermostat 10 will be described hereinafter (refer to Fig.2 and Fig3). The transfer of the buried type thermostat 10 from the closed status to the opened status and the transfer thereof from the opened status to the closed status are reverse actions. Therefore, an explanation will be given with respect to the transfer of the buried type thermostat 10 from the closed status to the opened status.

The liquid coolant inside the liquid coolant flow path 3 before the warming up is at a low temperature, and this temperature is transmitted to the wax 15a inside the wax case 15b by way of the periphery of the element (valve element) 15 and the wax case 15.

When the temperature of the liquid coolant inside the liquid coolant flow path 3 is low, the element 15 blocks the flow path area FA while the bypass exit opening 11c is in communication with the bypass line entrance opening 11d side.

Then, as the temperature of the liquid coolant inside the liquid coolant flow path 3 rises with the lapse of time, the wax 15a inside the wax case 15 expands to increase its volume. And in accordance with this volume increase, the diaphragm 15d bulges to the upper side, giving rise to a force to push the rubber piston 15e downward via semi-fluid 15c on the lower side. This force is transmitted to the piston 15g via backup plate 15f and the piston 15g tries to project out from the guide section 15h.

However, because a tip of the piston 15g is always in contact with the inner surface of the lower section of the valve body 11, the element 15 itself is pushed down by a relative movement against the piston 15g while overcoming the urge of the coil spring 14 (refer to Fig. 3).

Then, the thermo valve 12 slides upward such that the entrance opening 11a and the exit opening 11b of the valve 11 so far closed by the peripheral side wall of the element (valve element) 15 are opened and the flow path area FA is defined. Here, with said flow path area FA being thus defined, the bypass line exit opening 11c is closed by the peripheral side wall of the element (valve element) 15.

As a result, the bypass line is closed with the result that the liquid coolant flows as shown by bold arrow marks of Fig.3 from the radiator side to the engine side.

As described above, the sealing member in accordance with the present invention is incorporated with a valve function, thus eliminating the need for provision of a valve separately from the sealing member. Therefore, the valve function can be obtained easily and also at a low cost.

Further, in the thermostat mounting structure using the sealing member in accordance with the present invention, a conventional jiggle valve function can be obtained by using said sealing member. Still more, because the sealing member is provided with a so-called jiggle valve, a smaller thermostat can be provided as the engine of the two-wheeled vehicle is changed to water cooled type to comply with the exhaust gas regulation. And in comparison with conventional poppet type thermostat, a number of parts of the engine can be reduced as well as the peripheral parts. Furthermore, there is no need to carry out a special work on the thermostat itself. Therefore, the function of the jiggle valve can be obtained at a low cost.

## Claims

1. A thermostat mounting structure comprising a thermostat (10) and a sealing member, the sealing member (1) comprising:
a sealing body (1) formed by a sidewall (1a) surrounding an opening (1b) at a center thereof and a valve body accommodation section (1c) bored in said sidewall of said sealing body and extending along an axis of said sealing body (1); and a valve body (1g) accommodated in said valve body accommodation section (1c), wherein said valve body (1g) is a spherical jiggle ball, an upper surface opening (1_{C1}) and a bottom surface opening (1_{C2}) of said valve body accommodation section (1c) having a diameter as large as a diameter of said jiggle ball (1g) or less and also formed with a middle portion (1_{C3}) having a diameter as large as the diameter of said jiggle ball or more, and opening and closing actions of the valve accommodation section (1c) are performed by a movement of said jiggle ball therein,
and the thermostat (10) comprising:
a cylindrical valve body (11) formed with an entrance opening (11a) and an exit opening (11b) in a periphery thereof; a flowing area defined within said cylindrical valve body (11) to bring said entrance opening (11a) and said exit opening (11b) into communication with each other; and a valve element (15) movable back and forth across said flowing area in response to a temperature change of a liquid coolant which is flowing in said flowing area to provide blockage and communication of said area by opening and closing said entrance opening (11a) and said exit opening (11b) with its movement; the mounting structure further comprising:
an insertion hole (2a) formed across said liquid coolant line (3) where said valve body (11) is fitted; and
a lid (13) which secures the cylindrical valve body (11) inserted in said insertion hole (2a), and arranged in a manner such that opening and closing of said valve body accommodation section (1c) is done by a movement of the jiggle ball (1g), said lid (13) being fixed by way of said sealing member (1) while said liquid coolant line (3) and said valve body accommodation section (1c) are connected.

2. A thermostat mounting structure as set forth in claim 1 wherein said sealing body (1) is made of synthetic rubber, said jiggle ball (1g) being made of any one of steel, stainless steel, or synthetic resin.

3. A thermostat mounting structure according to claim 1 or 2 further comprising:
a bypass line entrance opening (11d) for connection to a bypass line (13a) and a bypass line exit opening (11c) in a periphery thereof, said valve element (15) also providing blockage and communication of said flowing area by opening and closing the bypass line entrance opening (11d) and the bypass line exit opening (11c) with its movement;
said lid (13) which secures the valve body (11) being inserted in said insertion hole (2a) while placing said bypass line (13a) in communication with said flow area; and
when said valve body (11) is inserted into the insertion hole (2a) and said lid (13) is secured by way of said sealing member (1), one of the openings (1_{C2}) of the valve body accommodation section (1c) and the liquid coolant line being connected while the other opening (1_{C1}) and said bypass line (13a) in the lid (13) are connected.

## Patentansprüche

1. Thermostatanbringstruktur mit einem Thermostat (10) und einem Abdichtelement, das Abdichtelement (1) mit:
einem Abdichtkörper (1), der mit einer Seitenwand (1a), die eine Öffnung (1b) an einer Mitte von dieser und einen Ventilkörperaufnahmeabschnitt (1c), der in die Seitenwand des Abdichtkörpers gebohrt ist und sich entlang einer Achse des Abdichtkörpers (1) erstreckt, umgibt, und einem Ventilkörper (1g) ausgebildet ist, der in den Ventilkörperaufnahmeabschnitt (1c) aufgenommen ist, wobei der Ventilkörper (1b) ein kugelförmiger Entlüftungsball ist, wobei eine obere Oberflächenöffnung (1_{c1}) und eine untere Oberflächenöffnung (1_{c2}) des Ventilkörperaufnahmeabschnitts (1c) einen Durchmesser aufweist, der kleiner oder gleich wie ein Durchmesser des Entlüftungsballs (1g) ist und der auch mit einem mittleren Abschnitt (1_{c3}) ausgebildet ist, der einen Durchmesser hat, der größer oder gleich einem Durchmesser des Entlüftungsballs ist, und wobei eine Öffnungs- und Schließbetätigung des Ventilaufnahmeabschnitts (1c) durch eine Bewegung des Entlüftungsballs darin ausgeführt werden,
und das Thermostat (10) mit:
einem zylindrischen Ventilkörper (11), der mit einer Zugangsöffnung (11a) und einer Ausgangsöffnung (11b) in einem Umfang davon ausgebildet ist, mit einer Flussfläche,
die innerhalb des zylindrischen Ventilkörpers (11) definiert ist, um die Zugangsöffnung (11a) und die Ausgangsöffnung (11c) miteinander in Verbindung zu bringen, und mit einem Ventilelement (15), das über die Flussfläche aufgrund einer Temperaturveränderung einer Kühlflüssigkeit, die in der Flussfläche fließt, hin und
her bewegbar ist, um eine Blockierung und eine Verbindung der Fläche durch Öffnen und Schließen der Zugangsöffnung (11a) und der Ausgangsöffnung (11c) mit ihrer Bewegung bereitzustellen, die Anbringstruktur ferner mit:
einem Einführloch (2a), das quer zu der Kühlflüssigkeitsleitung (30) ausgebildet ist, in das der Ventilkörper (11) eingepasst ist, und
einem Deckel (13), welcher den zylindrischen Ventilkörper (11), der in das Einführloch (2a) eingeführt ist, sichert und so angeordnet ist, dass das Öffnen und das Schließen des Ventilkörperaufnahmeabschnitts (1c) durch eine Bewegung des Entlüftungsballs (1g) vorgenommen wird, wobei der Deckel (13) durch das Abdichtelement (1) befestigt ist, während die Kühlflüssigkeitsleitung (3) und der Ventilkörperaufnahmeabschnitt (1c) verbunden sind.

2. Thermostatanbringstruktur nach Anspruch 1, bei welcher der Abdichtkörper (1) aus einem künstlichen Gummi hergestellt ist, wobei der Entlüftungsball (1g) aus Stahl, rostfreiem Stahl oder Kunstharz hergestellt ist.

3. Thermostatanbringstruktur nach Anspruch 1 oder 2, ferner mit:
einer Umgehungsleitungszugangsöffnung (11b) zur Verbindung mit einer Umgehungsleitung (13a) und einer Umgehungsleitungsausgangsöffnung (1c) in einer Umgehung von dieser, wobei das Ventilelement (15) auch ein Blockieren und eine Verbindung der Flussfläche durch Öffnen und Schließen der Umgehungsleitungszugangsöffnung (11b) und der Umgehungsleitungsausgangsöffnung (11c) mit ihrer Bewegung bereitstellt,
dem Deckel (13), welcher den Ventilkörper (11), der in das Einführloch (2a) eingeführt ist, sichert während er die Umgehungsleitung (13a) in Verbindung mit der Flussfläche platziert, und
wobei, wenn der Ventilkörper (11) in das Einführloch (2a) eingeführt ist und der Deckel (13) durch das Abdichtelement (1) gesichert ist, eine der Öffnungen (1-2) des Ventilkörperaufnahmeabschnitts (1b) und der Kühlflüssigkeitsleitung verbunden sind während die andere Öffnung (1_{c1}) und die Umgehungsleitung (13a) in dem Deckel (13) verbunden sind.

## Revendications

1. Structure de montage de thermostat comprenant un thermostat (10) et un élément d'étanchéité, l'élément d'étanchéité (1) comprenant :
un corps d'étanchéité (1) formé par une paroi latérale (1a) entourant une ouverture (1b) au niveau d'un centre de celle-ci et une section de logement de corps de soupape (1c) forée dans ladite paroi latérale dudit corps d'étanchéité et s'étendant le long d'un axe dudit corps d'étanchéité (1) ; et un corps de soupape (1g) logé dans ladite section de logement de corps de soupape (1c), dans lequel ledit corps de soupape (1g) est une bille sphérique à ballottement, une ouverture de surface supérieure (1_{c1}) et une ouverture de surface de fond 1_{c2}) de ladite section de logement de corps de soupape (1c) ayant un diamètre aussi grand qu'un diamètre de ladite bille à ballottement (1g) ou moins et également formée avec une partie médiane (1_{c3}) ayant un diamètre aussi grand que le diamètre de ladite bille à ballottement ou plus, et des actions d'ouverture et de fermeture de la section de logement de soupape (1c) sont effectuées par un mouvement de ladite bille à ballottement en son sein,
et le thermostat (10) comprenant :
un corps de soupape cylindrique (11) formé avec une ouverture d'entrée (11a) et une ouverture de sortie (11b) dans une périphérie de celui-ci ; une zone d'écoulement définie à l'intérieur dudit corps de soupape cylindrique (11) pour amener ladite ouverture d'entrée (11a) et ladite ouverture de sortie (11b) en communication l'une avec l'autre ; et un élément de soupape (15) mobile dans un va et vient d'un bout à l'autre de ladite zone d'écoulement en réponse à un changement de température d'un fluide de refroidissement liquide qui s'écoule dans ladite zone d'écoulement pour réaliser un blocage et une communication de ladite zone en ouvrant et en fermant ladite ouverture d'entrée (11a) et ladite ouverture de sortie (11b) avec son mouvement ; la structure de montage comprenant en outre :
un trou d'insertion (2a) formé à travers ladite conduite de fluide de refroidissement liquide (3) où ledit corps de soupape (11) est ajusté ; et
un couvercle (13) qui fixe le corps de soupape cylindrique (11) inséré dans ledit trou d'insertion (2a), et agencé de sorte que l'ouverture et la fermeture de ladite section de logement de corps de soupape (1c) sont effectuées par un mouvement de la bille à ballottement (1g), ledit couvercle (13) étant fixé à l'aide dudit élément d'étanchéité (1) tandis que ladite conduite de fluide de refroidissement liquide (3) et ladite section de logement de corps de soupape (1c) sont reliées.

2. Structure de montage de thermostat selon la revendication 1, dans lequel ledit corps d'étanchéité (1) est fait de caoutchouc synthétique, ladite bille à ballottement (1g) étant faite de l'un quelconque d'acier, d'acier inoxydable, ou de résine synthétique.

3. Structure de montage de thermostat selon la revendication 1 ou 2, comprenant en outre :
une ouverture d'entrée de conduite de contournement (11d) pour connexion à une conduite de contournement (13a) et une ouverture de sortie de conduite de contournement (11c) dans une périphérie de celle-ci, ledit élément de soupape (15) permettant également le blocage et la communication de ladite zone d'écoulement en ouvrant et en fermant l'ouverture d'entrée de conduite de contournement (11d) et l'ouverture de sortie de conduite de contournement (11c) avec son mouvement ;
ledit couvercle (13) qui fixe le corps de soupape (11) étant inséré dans ledit trou d'insertion (2a) tout en plaçant ladite conduite de contournement (13a) en communication avec ladite zone d'écoulement ; et
lorsque ledit corps de soupape (11) est inséré dans le trou d'insertion (2a) et que ledit couvercle (13) est fixé à l'aide dudit élément d'étanchéité (1), une des ouvertures (1_{c2}) de la section de logement de corps de soupape (1c) et la conduite de fluide de refroidissement liquide étant reliées tandis que l'autre ouverture (1_{c1}) et ladite conduite de contournement (13a) dans le couvercle (13) sont reliées.
